# EUROPEAN PATENT APPLICATION

(11) **EP 4 524 615 A1**
(43) Date of publication of application: **19.03.2025**
(21) Application number: 23218715.3
(22) Date of filing: 20.12.2023
(51) Int. Cl.: G01S 13/72, G01S 13/937

(54) **TARGET TRACKING APPARATUS AND TARGET TRACKING METHOD**

(30) Priority: 15.09.2023 JP 2023149845
(71) Applicant: Furuno Electric Company Limited, Hyogo 662-8580 (JP)
(72) Inventor: UOSHITA, Seiichi, Nishinomiya-City, 662-8580 (JP); FUJIOKA, Daisuke, Nishinomiya-City, 662-8580 (JP); TAKAHASHI, Hironori, Nishinomiya-City, 662-8580 (JP)
(74) Representative: Müller Hoffmann & Partner

(57) **Abstract**

The present invention discloses a target tracking apparatus for tracking a target in a detection target area, and is provided with an echo data acquiring module (11) which acquires echo data indicating a correspondence relationship between a position in the detection target area and a level of reflected waves reflected by electromagnetic waves transmitted through an antenna (21) at the position. A tracking processing module (12) configured to track a target based on the echo data. A tracking restriction area setting module (13) configured to set a tracking restriction area that specifies a region where the level of the reflected wave is equal to or greater than a threshold level based on the echo data. Thereafter, the tracking processing module (12) tracks the target based on the echo data in the area outside the tracking restriction area.

## Description

The present invention relates to a target tracking apparatus and a target tracking method.

Conventionally, a radar apparatus have a function of tracking a target based on an echo data. Several kinds of techniques have been developed to prevent the capturing of an unnecessary tracking target. For example, a Japanese Patent Publication No. JP2009-47550 describes an unnecessary tracking target removal apparatus.

The unnecessary tracking target removal apparatus is a device having a function of selecting and removing the unnecessary tracking target in a tracking function of automatically tracking a target supplemented by a radar function. The unnecessary tracking target removal apparatus is provided with a tracking target position information calculation part, a tracking target peripheral area generation part, and an inclusion relation judgment control part.

The tracking target position information calculation part calculates a position information on a latitude and a longitude of the tracking target based on a tracking target distance information and a tracking target orientation information of the tracking target notified by a tracking control part and the latitude and longitude information of a radar installation position. The tracking target peripheral area generation part generates a tracking target peripheral area indicating a peripheral area based on the tracking target position calculated by the tracking target position information calculation part.

The inclusion relation determination control part determines whether or not the tracking target is an unnecessary target based on the inclusion relation between a graphic component and the tracking target peripheral area based on the features of the graphic component of an electronic diagram data corresponding to the position of the tracking target. When the inclusion relation determination control part determines that the tracking target is an unnecessary target, it performs a control processing to output a tracking stop command to the tracking control part.

However, the technology described in the Japanese Patent Application, it is desirable to have a technology that is capable of suppressing false tracking of targets in a radar apparatus.

The present invention is made to solve the above-mentioned problems, and the target tracking apparatus, a target tracking method and a target tracking program capable of suppressing false tracking of targets are provided.

To solve the problems, the target tracking apparatus of the present invention is a target tracking apparatus for tracking a target in a detection target area, and is provided with an echo data acquiring module which acquires echo data indicating a correspondence relationship between a position in the detection target area and a level of reflected waves reflected by electromagnetic waves transmitted through an antenna at the position, and a tracking unit for performing tracking processing which tracks the target based on the echo data.

The target tracking apparatus is further provided with a tracking restriction area setting module for setting a tracking restriction area. The tracking restriction area setting module specifies a region where the level of the reflected wave is equal to or greater than a threshold level on the echo data. Then, a region whose size is equal to or greater than a predetermined value is specified as a tracking restriction area. The target tracking apparatus performs the tracking processing based on the echo data where the data of the position in the tracking restriction area is excluded. That is, the tracking processing module tracks the target based on the echo data in the area outside the tracking restriction area.

The target area is a region in which the level of the reflected wave is equal to or greater than a threshold level is equal to or greater than a predetermined value, may be an area such as land where the target to be detected does not exist. By setting the tracking restriction area including such the target area and performing tracking processing based on the echo data where the data of the position in the tracking restriction area is excluded. The potential target coordinates of the target in the tracking restriction area can be excluded from the tracking target. Thus, a false detection of the target based on the reflected wave reflected in the tracking restriction area can be suppressed. Therefore, the false tracking of the target can be suppressed in a radar apparatus.

According to the first aspect, the tracking restriction area setting module may approximate the target area by a polygonal reference area and set the reference area as the tracking restriction area when the reference area satisfies a predetermined condition. The tracking restriction area can be set by simple processing.

According to the second aspect, the tracking restriction area setting module may approximate the target area by a plurality of divided reference areas connected along an azimuthal direction centered on the antenna. When the reference area consisting of the plurality of divided reference areas satisfies the predetermined condition. The tracking restriction area setting module sets the reference area as the tracking restriction area. Since the tracking restriction area more accurately approximating the target area can be set. The target in the vicinity of the target area can be more accurately tracked.

According to the first aspect, the tracking restriction area setting module approximates the target area by a reference area surrounded by two straight lines extending in the distance direction from the antenna and two arcs extending in the azimuthal direction around the antenna, and when the reference area satisfies a predetermined condition, the reference area may be set as the tracking restriction area. The tracking restriction area can be set by a simple process.

The tracking restriction area setting module may approximate the target area by a divided reference area surrounded by two straight lines extending in the distance direction from the antenna and two arcs extending in the azimuthal direction around the antenna. When the reference area consisting of the plurality of divided reference areas where the straight lines overlap each other satisfies the predetermined condition, the reference area may be set as the tracking restriction area. Since the tracking restriction area which more accurately approximates the target area can be set. The target in the vicinity of the target area can be more accurately tracked.

According to the aspects as mentioned above, the tracking restriction area setting module may set the reference area as the tracking restriction area when the width of the reference area in the azimuthal direction centered on the antenna is not less than a predetermined value. An appropriate target area having a large azimuthal width can be set as the tracking restriction area.

According to the aspects as mentioned above, the tracking restriction area setting module may set the reference area as the tracking restriction area when the area of the reference area is equal to or greater than the predetermined value. The appropriate target area having a large area can be set as the tracking restriction area.

According to the aspects as mentioned above, the tracking restriction area setting module may set the reference area as the tracking restriction area when the depth length of the reference area relative to the antenna is not less than the predetermined value. The appropriate target area having a long depth length can be set as the tracking restriction area.

According to the aspects as mentioned above, the tracking section may perform the tracking processing based on the echo data in which the data of the position in the area far from the boundary line of the antenna side of the tracking restriction area is excluded. The potential target coordinates of the target mark in the tracking restriction area are tracked by simple processing. The potential target coordinates of the object mark in the tracking restriction area can be removed from the tracking target by simple processing.

According to the aspects as mentioned above, the echo data acquiring module may repeatedly acquire the echo data, and the tracking processing module may skip the tracking processing based on a first echo data and perform the tracking processing based on a second echo data acquired after the first echo data when the target cannot be detected based on the first echo data. For example, when the coordinates of the target to be detected deviate from the tracking target based on the tracking restriction area, and when the coordinates of the target cannot be detected based on the first echo data, the coordinates of the target can be detected and tracked based on the second echo data.

According to the aspects as mentioned above, the tracking processing module may detect the potential target of the target based on the echo data, and when the potential target exists in the tracking restriction area, the potential target may be removed from the tracking target in the tracking processing. The tracking target can be reduced and only the target to be tracked can be tracked, so that false tracking of the target can be suppressed and the processing load in the tracking processing can be reduced.

According to the aspects as mentioned above, the tracking processing module may further perform a background tracking processing for tracking the potential target removed from the tracking target in the tracking processing. The tracking processing module may perform processing for displaying the tracking result of the target tracked in the tracking processing and may not perform processing for displaying the tracking result of the potential target tracked in the background tracking processing. It makes it possible to display only the tracking result of the target to be displayed while continuing tracking of the potential target existing in the tracking restriction area.

In this configuration, the tracking processing module may further perform background tracking processing to track the potential target removed from the tracking target in the tracking processing. The tracking processing module may perform processing to display the tracking result of the target tracked in the tracking processing and the tracking result of the potential target tracked in the background tracking processing in different manners from each other. It makes it possible to display the tracking result of the target whose display is highly necessary, and the tracking result of the potential target existing in the tracking restriction area by distinguishing them.

According to the aspects as mentioned above, the echo data acquiring module may repeatedly acquire the echo data. When the potential target detected based on the first echo data exists in the tracking restriction area, the tracking processing module may remove the potential target from the tracking target in the tracking processing based on the first echo data and the echo data acquired after the first echo data. Since it is not necessary to determine whether the potential target of the detected target exists in the tracking restriction area every time the echo data is acquired, the processing load in the tracking processing can be reduced.

In order to solve the above-mentioned problem, the target tracking method of the present invention includes a method for tracking a target in a detection tracking restriction area. Echo data indicating a correspondence relationship between a position in the detection tracking restriction area and a level of a reflected wave reflected by an electromagnetic wave transmitted through an antenna at the position is acquired, and tracking processing for tracking the target is performed based on the echo data. The target tracking method further includes setting a tracking restriction area including a target area in which the level of the reflected wave is equal to or greater than a threshold level on the echo data and determining whether a region whose size is equal to or greater than a predetermined value is set as a tracking restriction area. The target tracking method also includes performing the tracking processing based on the echo data where the data of the position in the tracking restriction area is excluded. That is, the target tracking method includes tracking the target based on the echo data in the area outside the tracking restriction area.

By a method of setting a tracking restriction area including such target area and performing tracking processing based on echo data in which data of a position in the tracking restriction area is excluded, a potential target of coordinates of a target in the tracking restriction area can be excluded from the tracking target. Therefore, the false detection of a target based on reflected waves reflected in the tracking restriction area can be suppressed. Therefore, the false tracking of a target can be suppressed in the radar apparatus. According to the present invention, it is possible to suppress false tracking of a target in a radar apparatus.
Figure 1 is a diagram showing a configuration of a radar apparatus, according to an embodiment of the present invention.
Figure 2 is a diagram showing an example of an echo image displayed by a tracking processing module in the radar apparatus, according to an embodiment of the present invention.
Figure 3 is a diagram showing an example of a tracking restriction area set by a tracking restriction area setting module in the radar apparatus, according to an embodiment of the present invention.
Figure 4 is a diagram showing another example of the tracking restriction area set by a tracking restriction area setting module in the radar apparatus, according to an embodiment of the present invention.
Figure 5 is a flowchart showing an example of an operation when the tracking processing module in the radar apparatus, according to an embodiment of the present invention.
Figure 6 is a flowchart showing another example of an operation when the tracking processing module in the radar apparatus according to an embodiment of the present invention.

Embodiments of the present invention will now be described with reference to the drawings. The same reference numerals are given to the same or corresponding portions in the drawings, and the description is not repeated. At least some of the embodiments described below may be optionally combined.

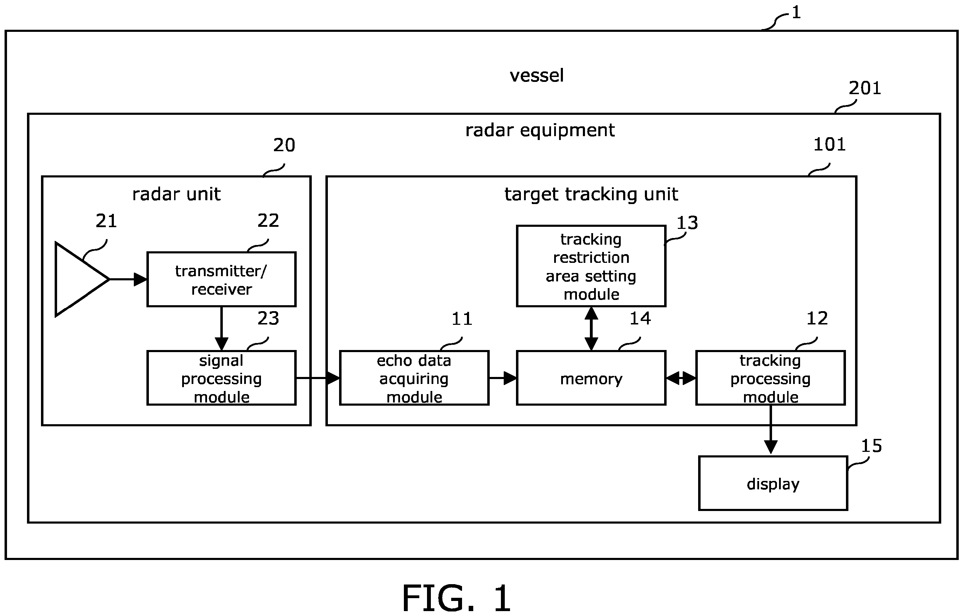

Figure 1 is a diagram showing a configuration of a radar apparatus according to an embodiment of the present invention. Referring to Figure 1, the radar equipment (201) is arranged on the vessel (1) and is provided with a radar unit (20), a target tracking unit (101), and a display (15) for displaying a tracked target.

The target tracking unit (101) is an example of a target tracking apparatus. The radar unit (20) includes an antenna (21), a transmitter/receiver (22), and a signal processing module (23). The target tracking unit (101) includes an echo data acquiring module (11), a tracking processing module (12), a tracking restriction area setting module (13) and a memory (14).

The target tracking unit (101) is an example of a tracking part. Some or all of the transmitter/receiver (22), the signal processing module (23), the echo data acquiring module (11), the tracking processing module (12), and tracking restriction area setting module (13) are implemented, for example, by a processing circuit (Circuitry) that includes one or more processors. The memory (14) is, for example, a nonvolatile memory included in the processing circuit.

The target tracking unit (101) tracks the target S of other vessels in the detection target area Ta and displays an echo image indicating the position of the target S on a display apparatus (not shown). For example, the detection target area Ta is an area inside a circle of a predetermined size centered on the vessel (1).

Radar section - the radar unit (20) generates divided echo data EdD. The divided echo data EdD is echo data Ed indicating a correspondence relationship between a position in the divided target area Da and an echo level at the position based on the reflected wave reflected by the electromagnetic wave transmitted through the antenna (21). The divided target area Da is a sector-shaped area in which the detection target area Ta is divided into N parts along an azimuthal direction. N is an integer of 2 or more. The echo level at each position of the divided echo data EdD indicates the level of the reflected wave reflected at that position. For example, the radar unit (20) generates the divided echo data EdD at a generation timing following a predetermined generation period.

More specifically, the transmitter/receiver (22) transmits an electromagnetic wave via the antenna (21) and receives a reflected wave reflected by the transmitted electromagnetic wave via the antenna (21) during a sweep period T of predetermined length. The transmitter/receiver (22) generates digital data Dd by digitally converting an echo data indicating the received reflected wave. The transmitter/receiver (22) repeats transmission of the electromagnetic wave and generation of digital data Dd while rotating the antenna (21) so that the azimuth angle in the transmission direction of the electromagnetic wave changes by a predetermined angle every sweep period T. Each time the transmitter/receiver (22) generates digital data Dd, it outputs the generated digital data Dd to signal processing module (23).

The signal processing module (23) generates divided echo data EdD based on a plurality of digital data Dd received from the transmitter/receiver (22). For example, the signal processing module (23) generates divided echo data EdD in which echo levels at a plurality of positions of the divided target area Da are binarized. More specifically, divided echo data EdD is generated in which the value of the echo level at a position where the echo level is equal to or greater than a predetermined threshold Th1 among a plurality of positions of the divided target area Da is converted to "1" and the value of the echo level at a position where the echo level is less than the threshold Th1 is converted to "0". Each time the signal processing module (23) generates divided echo data EdD, it transmits the generated divided echo data EdD to the target tracking unit (101).

Target tracking unit - the echo data acquiring module (11) in the target tracking unit (101) repeatedly acquires the concatenated echo data EdC which is the echo data Ed indicating the correspondence relationship between the position in the detection target area and the echo level at the position.

More specifically, the echo data acquiring module (11) receives the divided echo data EdD from the signal processing module (23) and stores the received divided echo data EdD in the memory (14). Each time the divided echo data EdD stored in the memory (14) reaches N, the echo data acquiring module (11) acquires N divided echo data EdD from the memory (14) and concatenates them to generate the concatenated echo data EdC. The echo data acquiring module (11) stores the generated concatenated echo data EdC in the memory (14).

The tracking processing module (12) performs a tracking process for tracking the target S based on the echo data Ed. More specifically, when the echo data acquiring module (11) stores the concatenated echo data EdC in memory (14), the tracking processing module (12) specifies coordinates indicating the current position of the target S based on the concatenated echo data EdC. The tracking processing module (12) calculates the predicted speed vector Vc of the target S based on the coordinates indicating the current position of the specified target S and the velocity vector inferred from the coordinates of the target S in the past sweep period T.

For example, when the target S cannot be detected based on the echo data Ed, the tracking processing module (12) skips the tracking processing based on the echo data Ed and performs the tracking processing based on the other echo data Ed generated after the echo data Ed. More specifically, when the coordinate indicating the current position of the target S cannot be determined based on the concatenated echo data EdC, the tracking processing module (12) waits for the echo data acquiring module (11) to store the new concatenated echo data EdC in memory (14). Then, the tracking processing module (12) determines the coordinate indicating the current position of the target S and calculates the predicted speed vector Vc based on the newly stored concatenated echo data EdC.

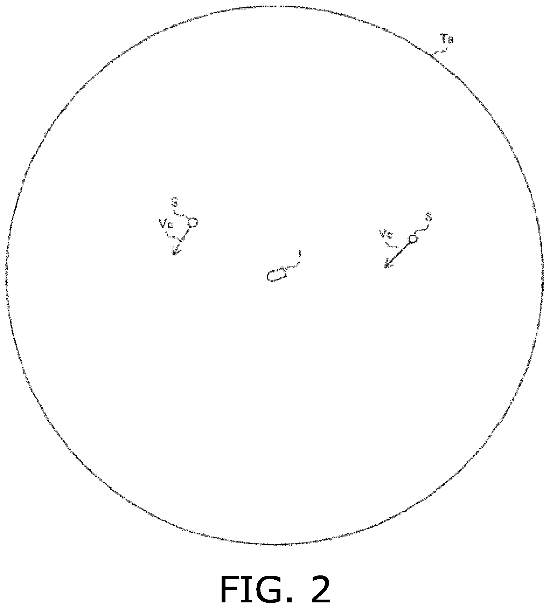

Figure 2 is a diagram showing an example of an echo image displayed by a tracking processing module in a radar apparatus according to an embodiment of the present invention. Referring to Figure 2, the tracking processing module (12) performs a process for displaying the tracking result of the target S. More specifically, the tracking processing module (12) generates an echo image showing the coordinates of the target S in the detection target area Ta and the predicted speed vector Vc of the target S, and performs a process for displaying the generated echo image on a display apparatus (not shown).

Based on the echo data Ed, the tracking restriction area setting module (13) sets a tracking restriction area Fa including an echo area Ea whose echo level is equal to or greater than a threshold value Th1 and whose magnitude is equal to or greater than a predetermined value. The echo area Ea is an example of a target area. More specifically, the tracking restriction area setting module (13) detects the echo area Ea based on the echo level indicated by the multiple divided echo data EdD in memory (14). The tracking restriction area setting module (13) sets the tracking restriction area Fa containing the detected echo area Ea. For example, echo area Ea is a land area. The tracking restriction area setting module (13) stores configuration information indicating the coordinates of the configured tracking restriction area Fa in memory (14). The details of the procedure for setting the tracking restriction area Fa by the tracking restriction area setting module (13) will be described later.

The tracking processing module (12) performs tracking processing based on the echo data Ed from which the data of the position in the tracking restriction area Fa is excluded. More specifically, when the potential target Cs of the coordinates of the target S detected based on the concatenated echo data EdC exists outside the tracking restriction area Fa, the tracking processing module (12) determines that the potential target Cs are coordinates indicating the current position of the target S and performs tracking processing. Specifically, the tracking processing module (12) calculates the predicted speed vector Vc of the target S based on the determined coordinates indicating the current position of the target S and the velocity vector inferred from the coordinates of the target S in the past sweep period T.

On the other hand, when the potential target Cs of the coordinates of the target S detected based on the concatenated echo data EdC exists in the tracking restriction area Fa, the tracking processing module (12) determines that the potential target Cs is not the coordinates indicating the current position of the target S and removes the potential target Cs from the tracking target in the tracking processing.

For example, when the potential target Cs detected based on the concatenated echo data EdC exists in the tracking restriction area Fa, the tracking processing module (12) removes the potential target Cs from the tracking target in the tracking processing based on the concatenated echo data EdC and other concatenated echo data EdC generated after the concatenated echo data EdC.

More specifically, when the potential target Cs exists in the tracking restriction area Fa in the concatenated echo data EdC initially generated after the activation of the target tracking unit (101), the tracking processing module (12) keeps the potential target Cs out of the tracking target even when the potential target Cs is located outside the tracking restriction area Fa in other concatenated echo data EdC generated after the concatenated echo data EdC.

For example, the tracking processing module (12) further performs background tracking processing to track potential target Cs that have been removed from the tracking target in the tracking processing. While the tracking processing module (12) performs processing to display the tracking result of target S as described above, the tracking result of potential target Cs that have been tracked in the background tracking processing are not processed.

In addition to the tracking result of target S, the tracking processing module (12) may be configured to perform processing to display the tracking result of potential target Cs that have been tracked in the background tracking processing. In this case, for example, the tracking processing module (12) performs processing to display the tracking result of target S that has been tracked in the tracking processing and the tracking result of potential target Cs that has been tracked in the background tracking processing in different ways. Specifically, the tracking processing module (12) performs processing to display the icon indicating target S and the icon indicating potential target Cs in different colors.

For example, the tracking processing module (12) performs tracking processing based on echo data Ed in which data of the position in the area far from the boundary line of antenna (21) side of tracking restriction area Fa is excluded. More specifically, the tracking processing module (12) detects the boundary line of antenna (21) side of tracking restriction area Fa based on the latest setting information in memory (14). The tracking processing module (12) performs tracking processing based on the echo level in the area on the antenna side of the boundary line among the echo levels indicated by the connected echo data EdC.

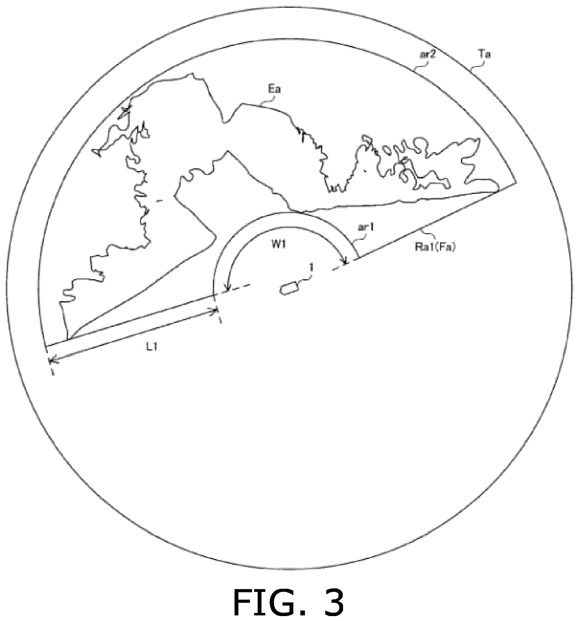

Setting example 1 of the tracking restriction area - Figure 3 is a diagram showing an example of a tracking restriction area set by a tracking restriction area setting module (13) in the radar apparatus, according to an embodiment of the present invention.

Referring to Figure 3, the tracking restriction area setting module (13) approximates the echo area Ea by a polygonal reference area Ra1 based on the echo data Ed. For example, the reference area Ra1 is a Birmkuchen-type area. More specifically, the reference area Ra1 is an area bounded by two straight lines extending in the distance from antenna (21) and two arcs ar1, ar2 extending in the azimuthal direction around antenna (21). That is, the reference area Ra1 is an area bounded by two circular arcs ar1, ar2 centered at antenna (21) and two-line segments connecting the two ends of arcar1 and the two ends of arc ar2, respectively. The tracking restriction area setting module (13) approximates the echo area Ea by the reference area Ra1 inscribed by the echo area Ea. The reference area Ra1 may be, for example, a sectorial area.

The tracking restriction area setting module (13) sets the reference area Ra1 as the tracking restriction area Fa when the approximate reference area Ra1 satisfies a predetermined condition. More specifically, the tracking restriction area setting module (13) determines whether the reference area Ra1 satisfies the condition A in which the width W1 in the azimuthal direction around the antenna (21) is equal to or greater than the predetermined value. The tracking restriction area setting module (13) determines whether the reference area Ra1 satisfies the condition B in which the area S1 is equal to or greater than the predetermined value. The tracking restriction area setting module (13) determines whether the condition C in which the depth length L1 of the reference area Ra1 with respect to the antenna (21) is equal to or greater than the predetermined value is satisfied.

When the reference area Ra1 satisfies all of the conditions A, B, and C, the tracking restriction area setting module (13) sets the reference area Ra1 as the tracking restriction area Fa. When the reference area Ra1 satisfies at least one of the conditions A, B, and C, the tracking restriction area setting module (13) may be configured to set the reference area Ra1 as the tracking restriction area Fa.

For example, the tracking restriction area setting module (13) updates the echo area Ea in the detection target area Ta and approximates the updated echo area Ea by the reference area Ra1 each time the echo data acquiring module (11) stores the divided echo data EdD in memory (14). The tracking restriction area setting module (13) waits for the echo data acquiring module (11) to store the new divided echo data EdD in memory (14) without setting the tracking restriction area Fa when the approximated reference area Ra1 does not satisfy some or all of the conditions A, B, and C.

On the other hand, the tracking restriction area setting module (13) sets the reference area Ra1 as the tracking restriction area Fa, when the approximated reference area Ra1 satisfies all of the conditions A, B, and C. Then, the tracking restriction area setting module (13) updates the setting information in the memory 14 to the setting information indicating the coordinates of the newly set tracking restriction area Fa.

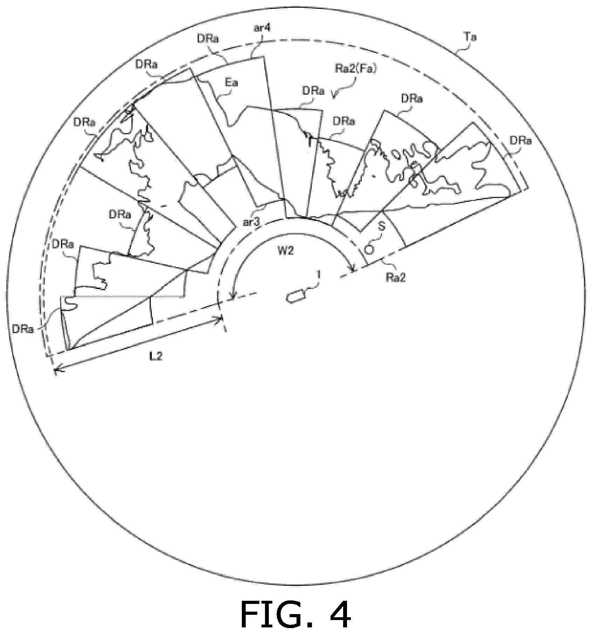

Example 2 of setting the tracking restriction area - Figure 4 is a diagram showing another example of a tracking restriction area set by a tracking restriction area setting module (13) in the radar apparatus according to an embodiment of the present invention. In Figure 4, the dashed line indicates the reference area Ra1.

Referring to Figure 4, the tracking restriction area setting module (13) approximates the echo area Ea by a plurality of divided reference area DRa connected along an azimuthal direction centered on the antenna (21), based on the echo data Ed. For example, the divided reference area DRa is an area bounded by two straight lines extending in a distance direction from the antenna (21) and two arcs ar3, ar4 extending in an azimuthal direction centered on the antenna (21) and is an area smaller than the reference area Ra1. That is, the divided reference area DRa is an area bounded by two circular arcs ar3, ar4 centered on the antenna (21) and two line segments connecting the two ends of the arcar3 and the two ends of the arcar4, respectively, and is an area smaller than the reference area Ra1. A reference area Ra2 is an area in the divided reference area DRa consisting of a plurality of divided reference areas DRa in which straight lines extending in the distance direction from the antenna (21) overlap each other. Note that the divided reference area DRa may be a sector-shaped area, for example. The tracking restriction area setting module (13) approximates the echo area Ea by a plurality of divided reference area DRa having equal azimuthal width.

The tracking restriction area setting module (13) sets the reference area Ra2 of a polygon consisting of a plurality of divided reference area DRa as the tracking restriction area Fa when the reference area Ra2 satisfies a predetermined condition.

More specifically, the tracking restriction area setting module (13) determines whether or not the reference area Ra2 satisfies the condition A in which the width W2 in the azimuthal direction around the antenna (21) is equal to or greater than a predetermined value. The tracking restriction area setting module (13) determines whether or not the reference area Ra2 satisfies the condition B in which the area S2 is equal to or greater than a predetermined value. The tracking restriction area setting module (13) determines whether or not the condition C in which the depth length L2 of the reference area Ra2 with respect to the antenna (21) is equal to or greater than a predetermined value is satisfied. When the reference area Ra2 satisfies all of the conditions A, B, and C, the tracking restriction area setting module (13) sets the reference area Ra2 as the tracking restriction area Fa. When the reference area Ra2 satisfies at least one of the conditions A, B, and C, the tracking restriction area setting module (13) may be configured to set the reference area Ra2 as the tracking restriction area Fa.

For example, the tracking restriction area setting module (13) updates the echo area Ea in the detection target area Ta each time the divided echo data EdD is stored in the memory (14) by the echo data acquiring module (11) and approximates the updated echo area Ea by a plurality of divided reference area DRa. The tracking restriction area setting module (13) waits for the echo data acquiring module 11 to store the new divided echo data EdD in the memory (14) without setting the tracking restriction area Fa when the reference area Ra2 consisting of the approximated plurality of divided reference area DRa does not satisfy some or all of the conditions A, B, C.

On the other hand, the tracking restriction area setting module (13) sets the reference area Ra2 as the tracking restriction area Fa when all of the conditions A, B, and C are satisfied by the reference area Ra2 consisting of the plurality of divided reference areas DRa. Then, the tracking restriction area setting module (13) updates the setting information in the memory (14) to the setting information indicating the coordinates of the newly set tracking restriction area Fa.

In this way, with the configuration in which the reference area Ra2 consisting of a plurality of divided reference areas DRa is set as the tracking restriction area Fa, the target S in front of the echo area Ea can be more accurately tracked from the viewpoint of the vessel (1) than with the configuration in which the reference area Ra1 is set as the tracking restriction area Fa.

Flow of operation - A radar apparatus, according to an embodiment of the present invention, is provided with a computer including a memory, and a processor such as a CPU in the computer reads and executes a program including part or all of the steps of the following flowchart from the memory. The program of the apparatus can be installed externally. The program of the apparatus is distributed in a state stored in a recording medium or through a communication line.

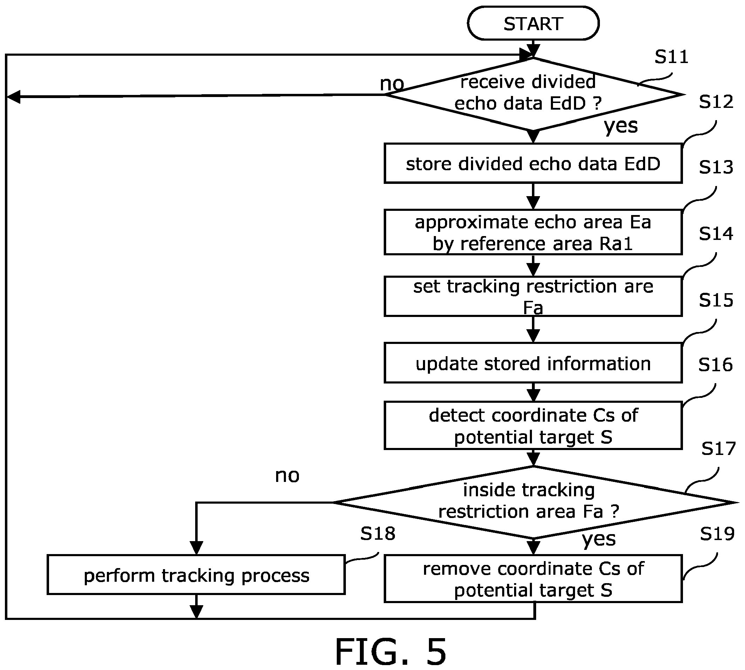

Figure 5 is a flowchart showing an example of the operation of the target tracking unit in the radar apparatus according to the embodiment of the present invention when performing tracking processing. Figure 5 is a flowchart of the setting example of the tracking restriction area described above.

Referring to Figure 5, at first, the target tracking unit (101) waits for the divided echo data EdD from the radar unit (20) (NO in step S 11), receives the divided echo data EdD from the radar unit (20) (YES in step S 11), and stores the received divided echo data EdD in the memory (14) (step S12).

Next, the tracking processing module (12) in the target tracking unit (101) updates the echo area Ea in the detection target area Ta based on the divided echo data EdD, and approximates the updated echo area Ea by the reference area Ra1 (step S13).

Next, the tracking restriction area setting module (13) sets the reference area Ra1 as the tracking restriction area Fa when, for example, the approximated reference area Ra1 satisfies all the conditions A, B, and C (step S14).

Next, the tracking processing module (12) updates the setting information in the memory (14) to the setting information indicating the coordinates of the newly set tracking restriction area Fa (step S15).

Next, the target tracking unit (101) detects the potential target Cs of the coordinates of the target S based on the concatenated echo data EdC (step S16).

Next, when the potential target Cs of the coordinates of the target S exists outside the tracking restriction area Fa (NO in step S 17), the target tracking unit (101) determines that the potential target Cs is a coordinate indicating the current position of the target S and performs tracking processing. More specifically, the tracking processing module (12) calculates the predicted speed vector Vc of the target S based on the coordinate indicating the current position of the target S and the velocity vector estimated from the coordinate of the target S in the past sweep period T (step S18).

Next, the tracking processing module (12) waits for a new generation timing (NO in step S 11).

On the other hand, when the potential target Cs of the coordinates of the target S exists in the tracking restriction area Fa (YES in step S 17), the tracking restriction area setting module (13) determines that the potential target Cs is not a coordinate indicating the current position of the target S and removes the potential target Cs from the tracking target (step S19).

Next, the target tracking unit (101) waits for a new generation timing (NO in step S 11).

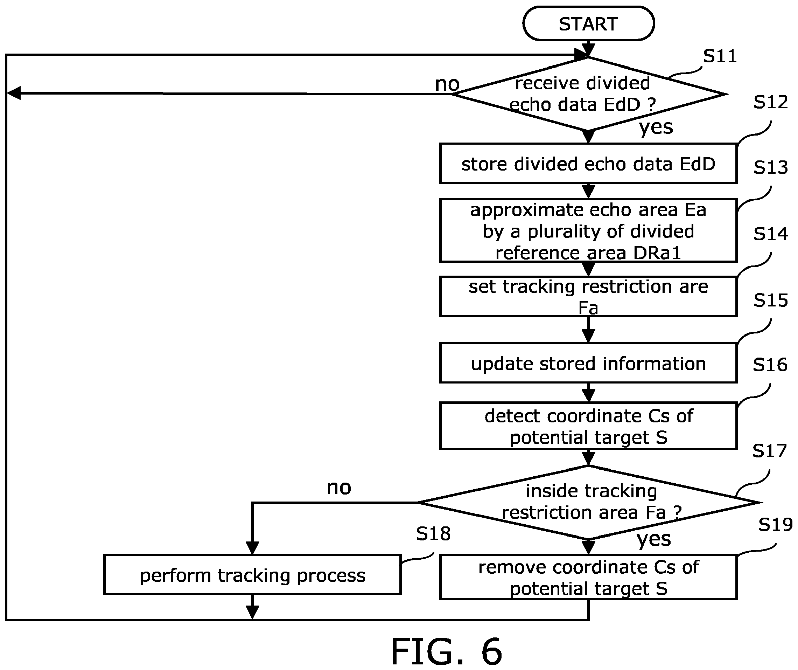

Figure 6 is a flowchart showing another example of an operation when the target tracking unit in the radar apparatus according to the embodiment of the present invention performs tracking processing. Figure 6 is a flowchart of another setting example of the tracking restriction area described above.

Referring to Figure 6, at first, the tracking processing module (12) waits for the divided echo data EdD from the radar unit (20) (NO in step S 21), and when the divided echo data EdD is received from the radar unit (20) (YES in step S 21), the received divided echo data EdD is stored in the memory (14) (step S22).

Next, the tracking processing module (12) updates the echo area Ea in the detection target area Ta based on the divided echo data EdD and approximates the updated echo area Ea by a plurality of divided reference area DRa (step S23).

Next, the tracking restriction area setting module sets the reference area Ra2 as the tracking restriction area Fa when, for example, the reference area Ra2 consisting of the approximated plurality of divided reference area DRa satisfies all the conditions A, B, and C (step S24).

Next, the tracking restriction area setting module (13) updates the setting information in the memory (14) to the setting information indicating the coordinates of the newly set tracking restriction area Fa (step S25).

Next, the tracking restriction area setting module (13) detects the potential target Cs of the coordinates of the target S based on the concatenated echo data EdC (step S26).

Next, when the potential target Cs of the coordinates of the target S exists outside the tracking restriction area Fa (NO in step S 27), the tracking restriction area setting module (13) determines that the potential target Cs is a coordinate indicating the current position of the target S and performs tracking processing. More specifically, the tracking restriction area setting module (13) calculates the predicted speed vector Vc of the target S based on the coordinate indicating the current position of the target S and the velocity vector estimated from the coordinate of the target S in the past sweep period T (step S28).

Next, the tracking processing module (12) waits for a new generation timing (NO in step S 21). On the other hand, when a potential target Cs for the coordinates of the target S exists in the tracking restriction area Fa (YES in step S 27), the tracking restriction area setting module (13) determines that the potential target Cs is not a coordinate indicating the current position of the target S and removes the potential target Cs from the tracking target (step S29).

Next, the tracking processing module (12) waits for a new generation timing (NO in step S21).

In the target tracking unit (101) according to the embodiment of the present invention, the tracking restriction area setting module (13) approximates the echo area Ea by the reference area Ra1 or a plurality of divided reference areas DRa, and sets the reference area Ra2 consisting of the reference area Ra1 or a plurality of divided reference areas DRa as the tracking restriction area Fa, but is not limited thereto.

The tracking restriction area setting module (13) may be configured to set the tracking restriction area Fa without approximating the echo area Ea by the reference area Ra1 or a plurality of divided reference areas DRa. More specifically, for example, the tracking restriction area setting module (13) sets the tracking restriction area Fa having a shape along the outer edge of the echo area Ea based on the digital data Dd generated by the transmitter/receiver (22) for each sweep period T.

The above embodiments should be considered illustrative and not restrictive in all respects. It is intended that the scope of the present invention be indicated by the claims rather than the above description and include all changes within the meaning and scope of the claims and equivalence.

### [List of Reference Numerals]

1 vessel
11 echo data acquiring module
12 tracking processing module
13 tracking restriction area setting module
14 memory
15 display
20 radar
21 antenna
22 transmitter/receiver
23 signal processing module
101 target tracking unit
201 radar unit
Ta detection target area
S target
Vc predicted speed vector
Ea echo area
Ra1, Ra2 reference area
DRa divided reference area
ar1, ar2, ar3, ar4 arc
Fa tracking restriction area

## Claims

1. A target tracking apparatus for tracking a target in a detection target area, comprising:
an echo data acquiring module (11) configured to acquire an echo data indicating a correspondence relationship between a position in a detection area and the level of a reflected wave at which an electromagnetic wave transmitted through an antenna (21) is reflected at the position;
a tracking processing module (12) configured to track a target based on the echo data; and
a tracking restriction area setting module (13) configured to set a tracking restriction area in which a region in which the level of the reflected wave is equal to or greater than a threshold level is equal to or greater than a predetermined value, based on the echo data,
wherein the tracking processing module (12) tracks the target based on the echo data in the area outside the tracking restriction area.

2. The target tracking apparatus according to claim 1, wherein:
the tracking restriction area setting module (13) is configured to:
approximate the tracking restriction area by a polygonal reference area; and
set the polygonal reference area as the tracking restriction area when the polygonal reference area satisfies a predetermined condition.

3. The target tracking apparatus according to claim 1, wherein:
the tracking restriction area setting module (13) is configured to:
approximate the tracking restriction area by a plurality of divided reference areas connected along an azimuthal direction centered on the antenna (21); and
set a reference area as the tracking restriction area when the reference area consisting of the plurality of divided reference areas satisfies a predetermined condition.

4. The target tracking apparatus according to claim 1, wherein:
the tracking restriction area setting module (13) is configured to:
approximate the tracking restriction area by a reference area surrounded by two straight lines extending in a distance direction from the antenna (21) and two arcs extending in an azimuthal direction centered on the antenna (21); and
set the reference area as the tracking restriction area when the reference area satisfies a predetermined condition.

5. The target tracking apparatus according to claim 1, wherein:
the tracking restriction area setting module (13) is configured to:
approximate the tracking restriction area by a divided reference area surrounded by two straight lines extending in a distance direction from the antenna (21) and two arcs extending in an azimuthal direction centered on the antenna (21); and
set the reference area as the tracking restriction area when the reference area consisting of a plurality of divided reference areas whose lines overlap each other satisfies a predetermined condition.

6. The target tracking apparatus according to any one of claims 2 to 4, wherein:
the tracking restriction area setting module (13) is configured to set the reference area as the tracking restriction area when the width of the reference area in the azimuthal direction centered on the antenna (21) is equal to or greater than a predetermined value.

7. The target tracking apparatus according to any one of claims 2 to 4, wherein:
the tracking restriction area setting module (13) is configured to:
set the reference area as the tracking restriction area when the area of the reference area is equal to or greater than the predetermined value.

8. The target tracking apparatus according to any one of claims 2 to 4, wherein:
the tracking restriction area setting module (13) is configured to:
set the reference area as the tracking restriction area when the length of the depth of the reference area relative to the antenna (21) is equal to or greater than the predetermined value.

9. The target tracking apparatus according to claim 1, wherein:
the tracking processing module (12) is configured to:
track the target based on the echo data where the data of the position in the area far from a boundary line of the antenna (21) side of the tracking restriction area is excluded.

10. The target tracking apparatus according to claim 1, wherein:
the echo data acquiring module (11) is configured to repeatedly acquire the echo data, and when the tracking processing module (12) fails to detect the target based on a first echo data, the tracking section skips the tracking processing based on the first echo data, and tracks the target based on a second echo data acquired after the first echo data.

11. The target tracking apparatus according to claim 1, wherein:
the tracking processing module (12) is configured to:
detect a potential target for the target area based on the echo data; and
removes the potential target from the tracking target in the tracking processing when the potential target exists in the tracking restriction region.

12. The target tracking apparatus according to claim 11, wherein:
the tracking processing module (12) is further configured to:
perform background tracking processing for tracking the potential target removed from the tracking target in the tracking processing; and
perform processing for displaying the tracking result of the target tracked in the tracking processing and does not perform processing for displaying the tracking result of the potential target tracked in the background tracking processing.

13. The target tracking apparatus according to claim 11, wherein:
the tracking processing module (12) is further configured to:
perform background tracking processing for tracking the potential target removed from the tracking target in the tracking processing; and
perform processing for displaying the tracking result of the target tracked in the tracking processing and the tracking result of the potential target tracked in the background tracking processing in a manner different from each other.

14. The target tracking apparatus according to claim 11, wherein:
the echo data acquiring module (11) is configured to repeatedly acquire the echo data, and
the tracking processing module (12) is configured to remove the potential target detected based on a first echo data from the tracking target in the tracking processing based on the first echo data and the echo data acquired after the first echo data, when the potential target detected based on the first echo data exists in the tracking restriction area.

15. The target tracking method for tracking the target in a detection area, comprising:
acquiring an echo data indicating a correspondence between a position in the detection area and a level of a reflected wave reflected by the electromagnetic wave periodically transmitted through the antenna (21) at the position;
specifying a target based on the echo data;
determining a tracking restriction area in which the region in which a level of the reflected wave is equal to or greater than a threshold level is equal to or greater than a predetermined value, based on the echo data;
tracking the target based on the echo data in an area outside the tracking restriction area.
